(19) Europäisches Patentamt
European Patent Office
Office européen des brevets

(11) **EP 2 662 863 A1**

(12) **EUROPEAN PATENT APPLICATION**
published in accordance with Art. 153(4) EPC

(43) Date of publication:
**13.11.2013 Bulletin 2013/46**

(51) Int Cl.:
***G21C 7/30*** *(2006.01)*

(21) Application number: **12732268.3**

(22) Date of filing: **05.01.2012**

(86) International application number:
**PCT/JP2012/050112**

(87) International publication number:
**WO 2012/093700 (12.07.2012 Gazette 2012/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.01.2011 JP 2011001865**

(71) Applicant: **Tokyo Institute of Technology
Tokyo 152-8550 (JP)**

(72) Inventor: **SEKIMOTO, Hiroshi
Tokyo 152-8550 (JP)**

(74) Representative: **Kurtz, Laurent Charles Edmond
Santarelli
14 avenue de la Grande-Armée
BP 237
75822 Paris Cedex 17 (FR)**

(54) **NUCLEAR REACTOR**

(57)      A nuclear reactor is provided with a core which includes a new fuel part and a burning part at which neutrons are generated and fuel is burned. The burning part moves in a direction toward the new fuel part from the beginning to the end of the combustion cycle. The plurality of the fuel assemblies of the core include the fuel assemblies which are fastened to the core and the fuel assemblies which can move in the longitudinal direction of the fuel assemblies. By pulling out the fuel assemblies from the core, the nuclear reactor can be made to stop. Further, by inserting fuel assemblies into the core from the pulled out state, the nuclear reactor is started up.

Fig.3

## Description

Technical Field

The present invention relates to a nuclear reactor.

Background Art

Nuclear reactors are used for electric power generating facilities. Nuclear reactors include fast neutron reactors. Fast neutron reactors are nuclear reactors which mainly use fast neutrons to cause fission of fissionable nuclides to generate output. Sodium, lead-bismuth alloys, and other heavy metals and, further, gas are used to cool the core. In nuclear reactors of the prior art, fission occurs at the core as a whole to generate output.

The criticality of the core of a nuclear reactor is maintained and the output is adjusted by for example control rods. The control rods are formed by a material which easily absorbs neutrons. At the start of a burning cycle, control rods are inserted into the core, and the control rods are gradually withdrawn along with the progress in burning so as to maintain the critical state while maintaining output. In this way, in operation of a nuclear reactor, control is necessary for maintaining the criticality of the nuclear reactor. Control is performed for maintaining the criticality on a continuous basis from the start of the burning cycle to the end of the burning cycle.

Japanese Patent No. 3463100 discloses a nuclear reactor in which control for maintaining the criticality in the burning cycle is unnecessary. This nuclear reactor employs the burning method called CANDLE (Constant Axial Shape of Neutron Flux, Nuclide Densities and Power Shape During Life of Energy Production) burning. In CANDLE burning, the core can be divided into a generally new fuel part, burning part, and burned up part. The burning part moves toward the new fuel part by a speed proportional to output along with burning. In CANDLE burning, after a single burning cycle is ended, fuel is replaced for the next burning cycle. When replacing the fuel, the burned up fuel can be taken out in the core axial direction and new fuel can be loaded in the end at the opposite side to the end at the taken out side.

In CANDLE burning, there is no need for adjustment of criticality. Further, even if not adjusting the power density distribution, the power density distribution is maintained substantially constant. For this reason, there is the feature that from the beginning to the end of the burning cycle, there is no need for control of the reactivity of the core such as manipulation of the control rods. Further, there is the feature that the reactivity coefficient does not change and it is not necessary to change the method of operation together with burning.

Citation List

Patent Literature

PLT 1: Japanese Patent No. 3463100

Summary of Invention

Technical Problem

By employing CANDLE burning as the method of burning fuel at a nuclear reactor, it is possible to provide a nuclear reactor in which the core properties can be maintained substantially constant even when burning progresses, control of the operation becomes simple, and the probability of accidents is low. Further, there is no need to arrange control rods in the core, so there is no possibility of accidents where the control rods are mistakenly pulled out during the operating period. Further, the burnup when taking out the fuel is high, so it is possible to reduce the amount of waste.

In CANDLE burning, as the new fuel for the second cycle and on, it is possible to use natural uranium or depleted uranium alone for operation. These fuels are subcritical, so are easy to transport and store. Further, it is possible to utilize about 40% of the uranium as energy without enrichment or reprocessing, so resources can be effectively utilized. Further, since the new fuel of the second cycle and on does not require enrichment, reprocessing, etc., there is the feature of a high proliferation resistance.

In this regard, in the conventional art, a nuclear reactor is started and stopped by using control rods. For example, during operation of a nuclear reactor, control rods can be inserted into the core so as to lower the power of the nuclear reactor and cause it to stop. Further, at the time of startup of a nuclear reactor, the inserted control rods can be pulled out to make the core critical, then raise the power of the core.

Even in a nuclear reactor which is provided with a core which employs CANDLE burning, it is possible to arrange control rods which are inserted into the core so as to start and stop the nuclear reactor. However, in CANDLE burning, if forming the channels for insertion of the control rods in the core, reaching criticality sometimes becomes difficult. In cores in the conventional art, it was possible to increase the concentration of fissionable uranium or the concentration of plutonium or increase the number of fuel assemblies of new fuel so as to reach criticality. In CANDLE burning as well, enriched uranium etc. can be included in the new fuel, but it is preferable not to use enriched uranium and to use only natural uranium or depleted uranium as new fuel.

Further, to make the fuel uniformly burn, it is preferable that the power density distribution in the radial direction be substantially constant. In this regard, if forming channels for insertion of control rods at the core, spaces will be formed in the core where no fuel is charged. In these spaces, the power density will end up becoming smaller and therefore there will be the  problem that the power density distribution in the radial direction will become uneven.

The present invention has as its object the provision of a nuclear reactor which is provided with a core in which a burning part moves toward a new fuel part along with burning of fuel and which can be started and stopped even without provision of control rods.

Solution to Problem

The nuclear reactor of the present invention is a nuclear reactor which is provided with a core which includes a new fuel part at which new fuel is loaded and a burning part which is arranged at one side of the new fuel part and which generates neutrons to enable the fuel to burn, the new fuel includes at least one type of uranium from among natural uranium and depleted uranium, the uranium absorbs neutrons to generate plutonium which fissions to generate power, and the burning part moves in a direction toward the new fuel part from the beginning to end of the burning cycle. During the period of power operation, a plurality of fuel assemblies are arranged at the core. The plurality of fuel assemblies include fuel assemblies which are fastened to the core and fuel assemblies which can move in the axial direction of the core. The movable fuel assemblies are pulled out from the core so as to make the nuclear reactor stop and the movable fuel assemblies are inserted into the core from the pulled out state so as to start the nuclear reactor.

In the present invention, preferably the reactor is provided with auxiliary members which include an absorption substance which absorbs neutrons, the auxiliary members are coupled with the movable fuel assemblies, and, when stopping the nuclear reactor, the auxiliary members are inserted into the core along with the movable fuel assemblies being pulled out from the core.

In the present invention, preferably the movable fuel assemblies are formed so that the fuel  assemblies as a whole are pulled out from the core.

In the present invention, the core may be divided into a center region and a peripheral region, the movable fuel assemblies may be arranged in the center region, and the fuel assemblies which are fastened to the core may be arranged at the peripheral region.

In the present invention, the movable fuel assemblies may be arranged at the core while separated at predetermined intervals.

Advantageous Effects of Invention

According to the present invention, it is possible to provide a nuclear reactor which is provided with a core in which a burning part moves toward a new fuel part along with burning of fuel and which can be started and stopped even without provision of control rods.

Brief Description of Drawings

FIG. 1 is a schematic view of a nuclear reactor in an embodiment.
FIG. 2 is a schematic plan view of a core in an embodiment.
FIG. 3 is a schematic cross-sectional view of a part including the core in an embodiment.
FIG. 4 is a schematic perspective view of a fuel assembly in an embodiment.
FIG. 5 is a schematic perspective view of a fuel rod in an embodiment.
FIG. 6 is a schematic perspective view of a fuel assembly and auxiliary member in an embodiment.
FIG. 7 is a schematic view for explaining the burned state of the fuel of a core in an embodiment.
FIG. 8 is a graph explaining the change in the infinite neutron multiplication factor with respect to the neutron fluence of fuel in an embodiment.
FIG. 9 is a graph which explains the relationship between the core height and the infinite neutron multiplication factor of fuel.
FIG. 10 is a view which explains change in power density of the core and replacement of fuel in an embodiment.
FIG. 11 is a schematic view of the core when stopping the nuclear reactor in an embodiment.

FIG. 12 is a schematic view of the core while starting the nuclear reactor in an embodiment.

FIG. 13 is a schematic plan view of another core in the embodiment.

Description of Embodiments

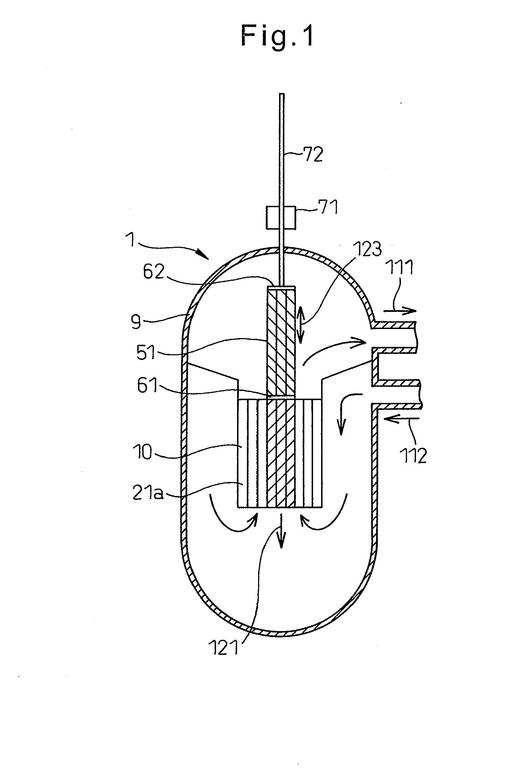

Referring to FIG. 1 to FIG. 13, a nuclear reactor in an embodiment will be explained. The nuclear reactor in the present embodiment is a fast neutron reactor which mainly use fast neutrons and cause fission of plutonium. The nuclear reactor in the present embodiment is arranged in an electric power generating facility and generates electric power by the heat of the coolant which flows out from the nuclear reactor.

FIG. 1 is a schematic view of a nuclear reactor in the present embodiment. The electric power generating facility in the present embodiment is provided with a nuclear reactor 1. The nuclear reactor 1 includes a reactor vessel 9. The nuclear reactor 1 includes a core 10 which is arranged inside of the reactor vessel 9. Inside of the reactor vessel 9, coolant flows. In the present embodiment, no reflecting material is arranged around the core 10, but the invention is not limited to this. A reflecting material may also be arranged around the core 10.

The coolant, as shown by the arrow 112, flows into the reactor vessel 9 and passes through the inside of the core 10. The heat of the core 10 is transmitted to the coolant. In the nuclear reactor 1 in the present embodiment, the coolant flows from the bottom side to the top side of the core 10. The coolant which flows out from the core 10 flows out from the reactor vessel 9 as shown by the arrow 111.

For the coolant, it is possible to use a material with a small neutron moderating ability and a small neutron absorption ability. In the present embodiment, a lead-bismuth coolant is used. In the present embodiment, the coolant has the function of a reflecting material. As the coolant of the nuclear reactor, in addition to a lead-based coolant (liquid metal), it is possible to use sodium. Further, it is possible to use helium or another gas coolant. Further, as the lead-based coolant, it is possible to employ lead alone in addition to lead-bismuth or the separated isotope lead 208.

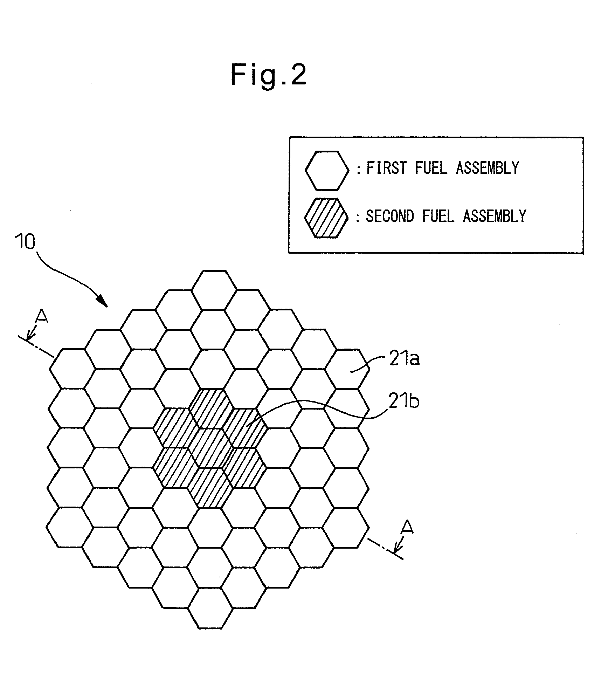

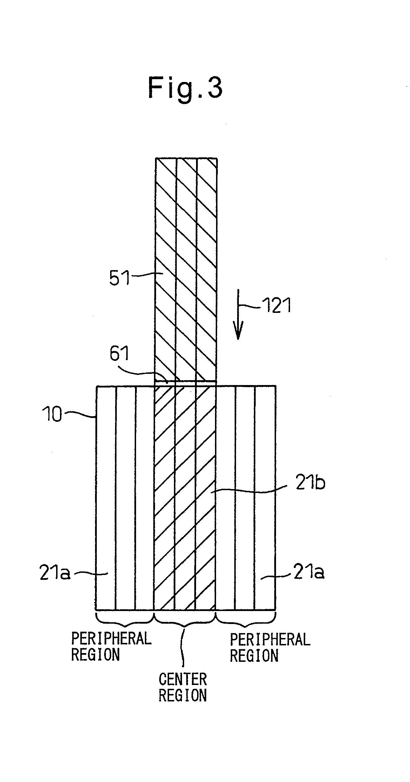

FIG. 2 is a schematic plan view of the core of a nuclear reactor in the present embodiment. FIG. 3 is a schematic cross-sectional view of the core of a nuclear reactor in the present embodiment. FIG. 3 is a cross-sectional view along the line A-A of FIG. 2. FIG 3 shows the state during a power operation of the nuclear reactor.

Referring to FIG. 2 and FIG. 3, the core 10 in the present embodiment is formed so as to become substantially regularly hexagonal in shape when viewed by a plan view. The invention is not limited to this. It may be formed into any geometric shape or circular shape becoming substantially circular when viewed by a plan view.

The core 10 in the present embodiment is divided into a center region and a peripheral region when seen by a plan view. The core in the present embodiment 10 includes a plurality of fuel assemblies. The core 10 of the nuclear reactor in the present embodiment has the fuel assemblies arranged regularly. At the peripheral region of the core, first fuel assemblies comprised of fuel assemblies 21a are arranged. At the center region of the core, second fuel assemblies comprised of fuel assemblies 21b are arranged.

The fuel assemblies 21a and the fuel assemblies 21b in the present embodiment are loaded with the same new fuel. In the present embodiment, depleted uranium is loaded. Further, the fuel assemblies 21a and the fuel assemblies 21b have substantially the same structures for supporting the fuel. The fuel assemblies 21a and the fuel assemblies 21b in the present embodiment are formed so as to be the same heights as each other. The fuel assemblies 21a which are arranged at the peripheral region are fastened to the core 10. On the other hand, the fuel assemblies 21b which are arranged at the center region are formed to be able to move in the axial direction of the core as explained later. In the core in the present embodiment, the vertical direction corresponds to the axial direction of the core.

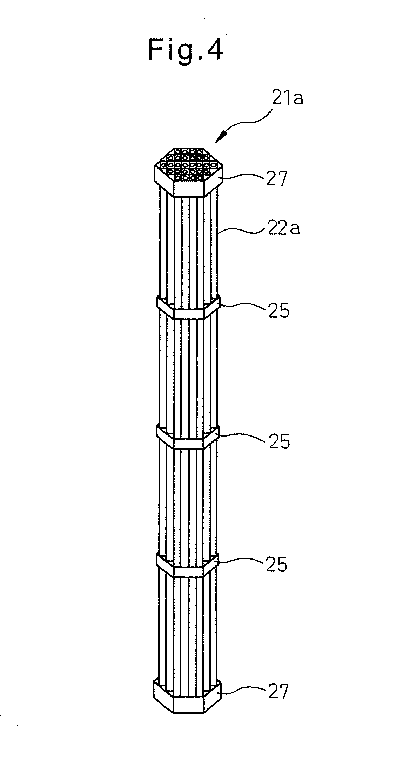

FIG. 4 shows a schematic perspective view of a fuel assembly in the present embodiment. Below, a first fuel assembly comprised of a fuel assembly 21a will be explained, but a second fuel assembly comprised of a fuel assembly 21b has a structure similar to a fuel assembly 21a.

Each first fuel assembly 21a includes a plurality of fuel rods 22a. The fuel rods 22a are supported by nozzles 27 at their longitudinal direction ends. The fuel rods 22a are supported by a plurality of support grids 25. The nozzles 27 and the support grids 25 support the fuel rods 22a to be separated from each other. In the present embodiment, the support grids are used to maintain the distance between the fuel rods, but the invention is not limited to this. Instead of support grids, it is also possible to use wire spacers etc. The coolant flows between the fuel rods 22a and cools the fuel rods 22a.

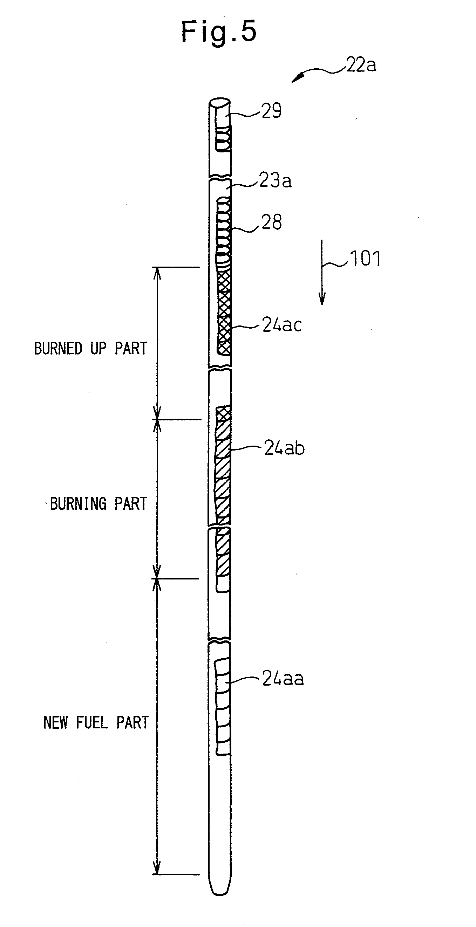

FIG. 5 is a schematic perspective view of a fuel rod in the present embodiment. FIG. 5 shows a fuel rod in which the burning part of the fuel moves from the top side toward the bottom side. Part of the cladding material is shown cut away. The fuel rod 22a in the present embodiment includes a cladding material 23a. The cladding material 23a is formed in a tubular shape. The cladding material 23a is, for example, formed by stainless steel. The fuel rod 22a contains fuel pellets 24aa, 24ab, and 24ac. The fuel pellets 24aa, 24ab, and 24ac are arranged inside the cladding material 23a. The fuel rod 22a is sealed by a cap 29. The fuel pellets 24aa, 24ab, and 24ac are pushed down by a coil spring 28.

The fuel rod shown in FIG. 5 shows the state at the beginning of a burning cycle. A plurality of fuel pellets 24aa, 24ab, and 24ac are arranged in the order of fuel pellets 24aa containing new fuel, fuel pellets 24ab in the middle of burning, and fuel pellets 24ac fully burned up. The new fuel part of the core is defined by the part of the fuel pellets 24aa containing new fuel. The burning part of the core is defined by the part of the fuel pellets 24ab in the middle of burning. The burned up part of the core is defined by burned up fuel pellets 24ac.

In this way, in the fuel rod 22a in the present embodiment, fuel pellets 24aa, 24ab, 24ac of different burnup are arranged. After the end of one burning cycle, for example, the cladding material 23a is stripped off and the fuel pellets of the burned up part and the other fuel pellets are separated. Next, fuel pellets containing new fuel and the recovered fuel pellets are arranged inside a new cladding material, whereby it is possible to form a fuel rod for the next burning cycle.

Further, as the method of recovering fuel pellets, it is also possible to cut the fuel rod at each part, then strip off the cladding material 23a. This method may also be used to recover fuel pellets which were arranged at the burning part and burned up part.

Referring to FIG. 2 to FIG. 5, the fuel pellets which are arranged at the new fuel parts of the fuel assemblies 21a and the fuel assemblies 21b in the present embodiment include depleted uranium. The fuel in the present embodiment is a metal fuel, but the invention is not limited to this. For example, a nitride fuel etc. may also be used.

Referring to FIG. 1 and FIG. 3, the nuclear reactor in the present embodiment is provided with auxiliary members 51 for absorbing neutrons. The auxiliary members 51 in the present embodiment include an absorption substance which has the function of absorbing neutrons. As the absorption substance, a substance which has a high ability of absorption of fast neutrons is preferable. As the absorption substances, for example, boron carbide ($B_4C$) etc. may be mentioned.

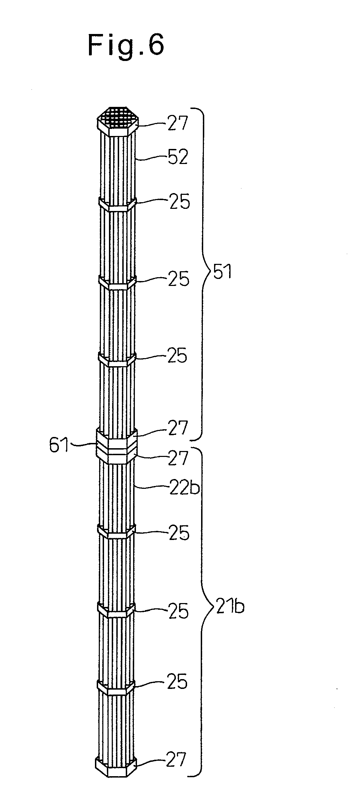

FIG. 6 is a schematic perspective view of a movable fuel assembly and auxiliary member in the present embodiment. The auxiliary member 51 in the present embodiment has a configuration similar to the fuel assemblies 21a, 21b except that no fuel is arranged inside of the cladding material but an absorption substance which has the function of absorbing neutrons is arranged there.

Each auxiliary member 51 includes a plurality of absorption rods 52. The absorption rods 52 have cladding materials and have absorption substances arranged inside the cladding materials. The auxiliary member 51 has support grids 25 and nozzles 27 for supporting the absorption rods 52. These support grids 25 and nozzles 27 may be ones similar to those used for the fuel assemblies 21a, 21b.

Each auxiliary member 51 is coupled with a fuel assembly 21b. The fuel assembly 21b includes a plurality of fuel rods 22b. In the present embodiment, a fuel assembly 21b is coupled with an auxiliary member 51 through a coupling member 61. The fuel assembly 21b is connected to the auxiliary member 51 in line in the axial direction of the core.

Referring to FIG. 1 and FIG. 3, the nuclear reactor in the present embodiment is provided with a movement apparatus for making the fuel assemblies 21b move. The movement apparatus includes a drive device 71 for making the fuel assemblies 21b move. The auxiliary members 51 are connected through a coupling member 62 to a drive rod 72. By starting the drive device 71, the drive rod 72 moves, as shown by the arrows 123, in the axial direction of the core 10. The auxiliary members 51 and the fuel assemblies 21b can be made to move in the axial direction of the core.

Next, the power operation of the core in the present embodiment will be explained. In the present embodiment, an example where the power is maintained substantially constant during the power operation will be explained.

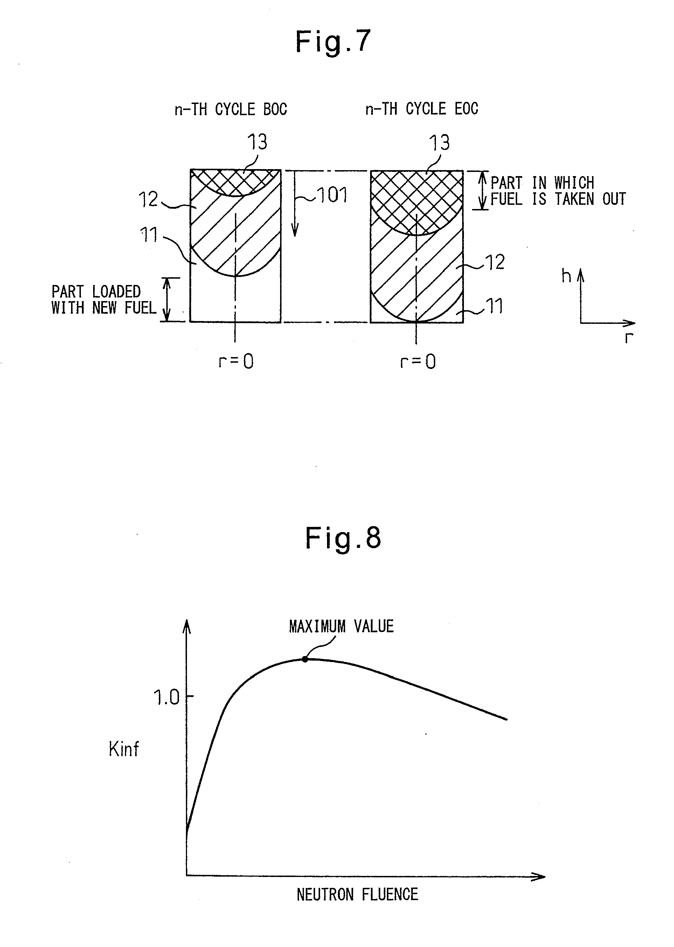

FIG. 7 is a schematic view for explaining the state of progress of burning of the core in the present embodiment. FIG. 7 is a schematic cross-sectional view when cutting the core along the axial direction. FIG. 7 shows a core at the beginning of cycle (BOC) of the n-th cycle and a core at the end of cycle (EOC) of the n-th cycle after a plurality of burning cycles. Further, it shows a core after a plurality of cycles of operation by the same cycle length and same fuel replacement method. The axis at the zero position r in the radial direction is the core axis.

The core 10 of the nuclear reactor in the present embodiment is one in which the burning part 12 moves toward the new fuel part 11 from the beginning to end of the burning cycle. That is, the core of the present embodiment performs CANDLE burning. The velocity of movement of the burning part 12 is roughly proportional to the power density and is inversely proportional to the fuel atomic number density.

The power density of the core in the present embodiment becomes higher at the center of the core. At the periphery of the core, leakage of neutrons becomes greater, so the power density becomes smaller the further toward the outside in the radial direction. For this reason, the position of the burning part in the axial direction is shifted more to the later position the further toward the outside in the radial direction.

The core 10 in the present embodiment includes the new fuel part 11, burning part 12, and burned up part 13. The new fuel part 11 is the part at which new fuel is arranged. The burning part 12 is a part at which neutrons are produced and the fuel burns. At the burning part 12, fission occurs whereby output is substantially produced. The burned up part 13 is a part which has burned up and almost no output is being produced.

At the core at the beginning of the n-th cycle, the new fuel part 11 is arranged at the bottom part of the core 10. The burning part 12 is arranged at the upper side of the new fuel part 11. At the burning part 12, fuel which already began burning at the previous cycle is arranged.

In the present embodiment, the burning part 12 arranged at the beginning of cycle becomes the part where burning is started. The fuel starts to burn from the burning part 12 and, as shown by the arrow 101, proceeds to burn in a direction toward the new fuel part 11. When the burning of n-th cycle proceeds and the end of cycle is reached, the burning part 12 proceeds down to the bottom end of the core 10. In the present embodiment, the burning is continued until almost all the new fuel part 11 is consumed. At the end of the burning cycle, the new fuel part 11 may remain.

FIG. 8 is a graph which explains the relationship between the neutron fluence of fuel and infinite neutron multiplication factor in the present embodiment. The abscissa indicates the neutron fluence obtained by integrating the neutron flux over time, while the ordinate indicates the infinite neutron multiplication factor kinf. The neutron fluence is a quantity corresponding to the burnup of fuel for example. In the present embodiment, depleted uranium is used as fuel. Depleted uranium contains about 99.8% of uranium 238 and about 0.2% of uranium 235. Uranium 238 absorbs neutrons and nuclear transformation occurs as shown in the following formula 1. Uranium 238 is transformed to plutonium 239.

$$(\text{Formula } 1)$$

$$\,^{238}_{92}\text{U} + \text{n} \rightarrow \,^{239}_{92}\text{U} \xrightarrow{\beta-\text{decay}} \,^{239}_{93}\text{Np} \xrightarrow{\beta-\text{decay}} \,^{239}_{94}\text{Pu}$$

In the vicinity of zero neutron fluence, uranium 238 absorbs neutrons whereby plutonium 239 is produced. Due to this, the infinite neutron multiplication factor rises. When reaching a predetermined neutron fluence, the ratio of the amount of plutonium 239 etc. to the amount of uranium 238 approaches a constant one, fission products (FP) build up, and the infinite neutron multiplication factor is gradually reduced. In this way, the fuel in the present embodiment has the property that the infinite neutron multiplication factor increases at the beginning of burning and the infinite neutron multiplication factor gradually decreases after that.

Further, the subcriticality of depleted uranium is large, so to make part of the core critical or more, a large amount of neutrons have to be made to be absorbed at the uranium 238. In the present embodiment, the core size is selected and the fuel assemblies and fuel rods are designed so as to satisfy these conditions.

By employing such a core configuration, it is possible to perform CANDLE burning. That is, it is possible to form a core wherein output is produced over the entire radial direction of the core and wherein a burning part is formed in part of the region in the axial direction of the core.

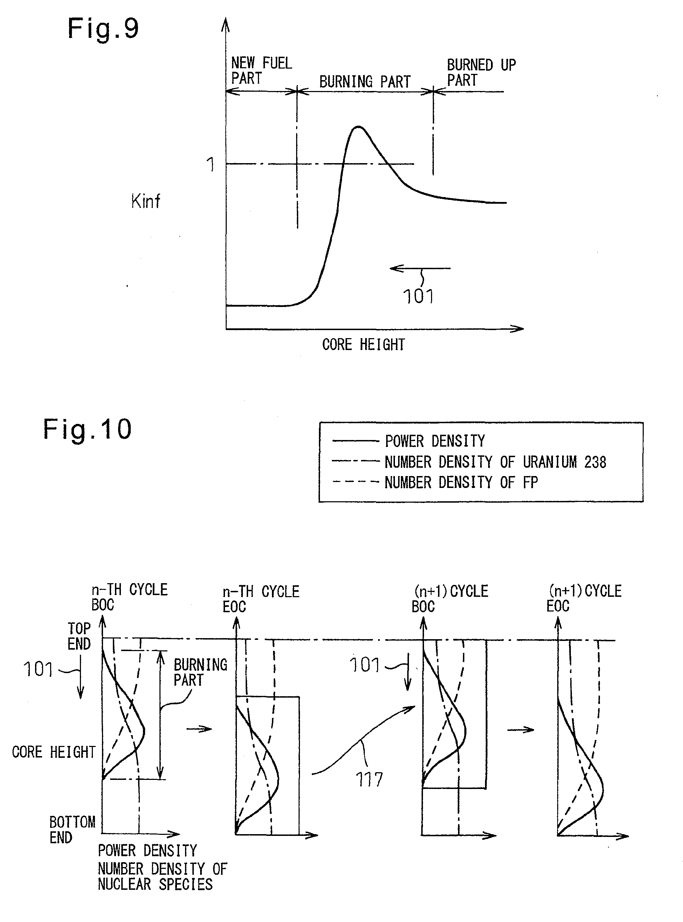

FIG. 9 shows a graph of the infinite neutron multiplication factor when burning fuel by an infinite core height. The abscissa indicates the core height, while the ordinate indicates the infinite neutron multiplication factor of fuel. In the present embodiment, as shown by the arrow 101, the burning part moves toward the new fuel part. The burning part includes a region with an infinite neutron multiplication factor of over 1. The height of a core of an actual nuclear reactor is finite. In this case, the infinite neutron multiplication factor at the end of the core is slightly off from the graph shown in FIG. 9.

FIG. 10 is a graph which explains the state of progress of burning of the core and fuel replacement in the present embodiment. FIG. 10 shows a graph of a core at the beginning and end of the n-th cycle and a graph of a core at the beginning and end of the (n+1)th cycle. In the graphs, the power density at the core axis, the number density of uranium 238, and the number density of fission products are shown.

Referring to FIG. 9 and FIG. 10, the maximum point of the power density, as shown by the arrow 101, moves toward the bottom of the core where the new fuel part 11 is arranged. The burning part in the present embodiment moves in a direction from the top end to the bottom end of the core. The velocity at which the burning part moves, that is, the velocity at which the maximum point of the power density moves, is, for example, several cm a year. In this way, the burning part moves slowly. The number density of uranium 238 is made smaller at the downstream side of the burning part due to nuclear transformation. Further, the number density of the fission products becomes larger at the downstream side of the burning part due to fission. In the present embodiment, the fuel finishes burning when the burning part reaches the substantial bottom end of the core.

When the n-th cycle ends, part of the burned up part of the fuel is taken out. At the core at the beginning of the (n+1)th cycle, as shown by the arrow 117, the burning part which is arranged at the bottom part of the core at the n-th cycle is arranged at the top part of the core and is used as the part for starting burning. At the core at the (n+1)th cycle, a new fuel part 11 is newly arranged at the bottom of the core. By replacing the fuel in this way, it is possible to burn fuel in the same way as the n-th cycle in the core at the (n+1)th cycle as well.

Next, the stopping of the nuclear reactor in the present embodiment will be explained. Referring to FIG. 1 to FIG. 3, during the usual power operation, the fuel assemblies 21b are arranged inside of the core 10. When stopping the nuclear reactor, the drive device 71 is driven so as to, as shown by the arrow 121, make the auxiliary members 51 and the fuel assemblies 21b move integrally. The fuel assemblies 21b move from the inside to the outside of the core 10. On the other hand, the auxiliary members 51 are inserted inside of the core 10. That is, the movable fuel assemblies 21b are pulled out from the core 10 while the auxiliary members 51 are inserted into the core 10.

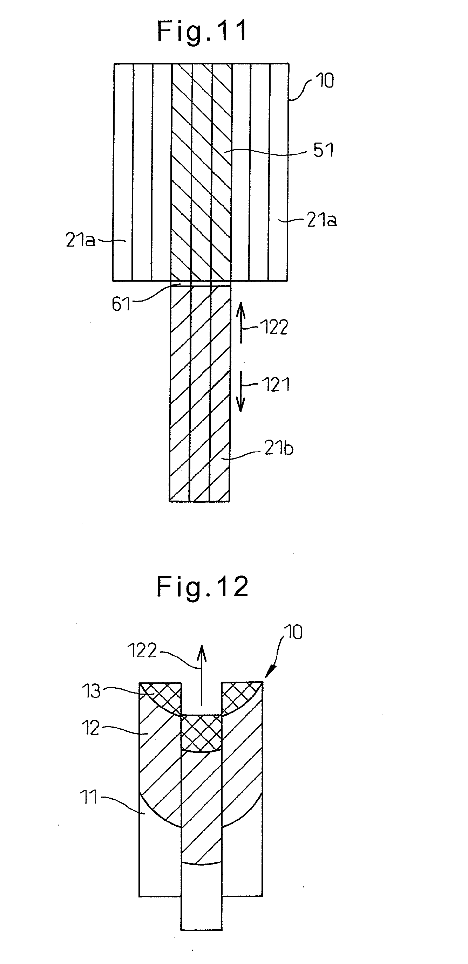

FIG. 11 is a schematic cross-sectional view of the part of the core when stopping the nuclear reactor in the core of the present embodiment. In the core in the present embodiment, the movable fuel assemblies 21b as a whole are pulled out from the core 10. Further, the auxiliary members 51 are inserted into the core.

By having the fuel assemblies 21b pulled out from the core 10, the leakage of neutrons from the core 10 becomes greater and the core 10 can be made subcritical and stopped. Referring to FIG. 7, the core 10 in the present embodiment maintains criticality by chain nuclear fission at the part of the burning part 12. In this regard, by moving the fuel assemblies 21b, part of the burning part 12 is shifted in the axial direction of the core 10 and chain nuclear fission at the burning part 12 is suppressed. For this reason, the core 10 can be  made subcritical.

Further, in the core 10 of the present embodiment, when stopping the nuclear reactor, the auxiliary members 51 are inserted into the core 10. By having the auxiliary members 51 inserted into the core, neutrons are absorbed at the auxiliary members 51. For this reason, the nuclear reactor can be made to stop more reliably.

The present embodiment is formed so that the movable fuel assemblies as a whole are pulled out from the core. Due to this configuration, the nuclear reactor can be made to stop more reliably. The amount of pullout of the movable fuel is not limited to this. If it is possible to stop the nuclear reactor by pulling out part of the movable fuel assemblies, the embodiment may also be formed so that part of the fuel assemblies is pulled out from the core.

Next, the startup of the nuclear reactor in the present embodiment will be explained. At the time of startup of the nuclear reactor, the movable fuel assemblies among the fuel assemblies are inserted into the core so as to achieve criticality and raise the power.

FIG. 12 is a schematic cross-sectional view of the part of a core while starting up the nuclear reactor in the nuclear reactor of the present embodiment. As explained above, when the n-th cycle ends, at the fuel assemblies 21a, 21b, the fuel at the burned up part 13 is taken out and new fuel is loaded into the new fuel part 11.

Referring to FIG. 11 and FIG. 12, when starting up the nuclear reactor, at least part of the movable fuel assemblies 21b are at a pulled out state from the core 10. The fuel assemblies 21b are moved as shown by the arrow 122 and inserted inside of the core 10. If the fuel assemblies 21b are inserted, the core 10 becomes critical at a predetermined position. Furthermore, if inserting  the fuel assemblies 21b, the power of the core 10 rises. By inserting the fuel assemblies 21b as a whole, the power of the core reaches a predetermined power. After that, steady power operation can be continued.

When inserting the fuel assemblies 21b into the core 10, if moving the fuel assemblies 21b at a high speed, a large positive reactivity will be given to the core 10 and the power will suddenly rise in some cases. Therefore, when inserting the fuel assemblies 21b into the core 10, it is preferable to move the fuel assemblies 21b at a low speed. Alternatively, it is preferable to gradually insert the fuel assemblies 21b. For example, it is preferable to gradually insert the fuel assemblies 21b into the core 10 so that the power of the core rises by a predetermined rate.

At core of the nuclear reactor in the present embodiment, the nuclear reactor can be started and the nuclear reactor can be stopped even without using control rods. Channels for insertion of control rods to the core 10 become unnecessary and leakage of neutrons can be suppressed. For this reason, the criticality of the core can be easily achieved by CANDLE burning. Furthermore, the average power density of the core can be raised.

Further, if forming channels for insertion of control rods in the core 10, the integrated value of the power density in the axial direction of the core becomes smaller near the channels. Here, in the present embodiment, the integrated value of the power density in the axial direction of the core at any position in the radial direction is referred to as "axial direction integrated power". Since the channels for insertion of control rods are not loaded with fuel, the axial direction integrated power ends up becoming smaller. For this reason, the burnup of the fuel which is arranged near the channels for insertion of control rods becomes smaller. The burning of fuel becomes uneven in the radial direction of the core.

In the core in the present embodiment, it is possible to eliminate the channels for insertion of control rods, so it is possible to make the axial direction integrated power approach a substantially constant state in the radial direction. That is, it is possible to make the power density distribution in the radial direction close to constant. Fuel can be made to burn more uniformly. Further, since the power density distribution in the radial direction can be made to approach a constant one, for example, operational control becomes easier and design of the nuclear reactor becomes easier.

The core of the present embodiment is formed so that movable fuel assemblies and auxiliary members are provided, the fuel assemblies are pulled out from the core, and auxiliary members are inserted into the core, but the invention is not limited to this. If possible to pull out and insert the movable fuel assemblies to stop and start the nuclear reactor, the auxiliary members need not be arranged. For example, by pulling out part of the fuel assemblies from the core, the leakage of neutrons from the core is made to increase and the amount of uranium which is arranged at the core can be reduced. For this reason, a large negative reactivity can be given to the core. Depending on the structure of the nuclear reactor, the nuclear reactor can be stopped and started even without arranging the auxiliary members.

Further, the auxiliary members in the present embodiment include an absorption substance which has the function of absorbing neutrons, but the invention is not limited to this. So long as being able to stop the nuclear reactor, the absorption substance need not be included. Even without the absorption substance being provided, the auxiliary members can be inserted into the core so as to maintain the mechanical strength of the core.

In the core, the movable fuel assemblies are  arranged at the center region while the fuel assemblies which are fastened to the core are arranged in the peripheral region. Due to this configuration, the design of the movement apparatus for making the fuel assembly move can be simplified. Such a core is, for example, suitable for a small sized core with a small number of fuel assemblies.

The core in the present embodiment is formed so as to pull out the fuel assemblies in the center region from the core, but the invention is not limited to this. It may also be formed so as to pull out the fuel assemblies which are arranged at the peripheral region from the core. The number of fuel assemblies which are pulled out can be determined so as to enable the nuclear reactor to be started up and stopped. Further, the arrangement of the movable fuel assembly is not limited to the above embodiment. They may be arranged at any positions.

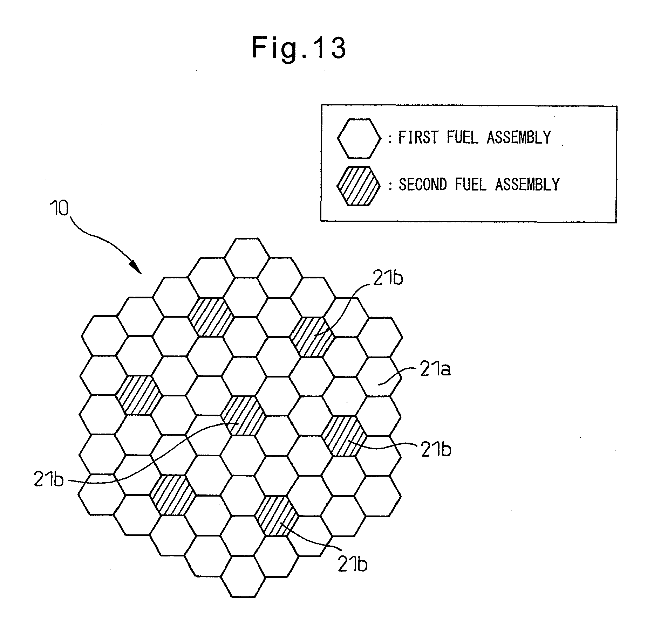

FIG. 13 is a schematic plan view of another core in the present embodiment. The second fuel assemblies comprised of the movable fuel assemblies 21b are arranged substantially evenly across the entirety of the core 10. The plurality of fuel assemblies 21b are arranged at predetermined intervals so as not to contact each other. The plurality of fuel assemblies 21b are arranged separated. By employing this configuration as well, it is possible to move the fuel assemblies 21b so as to stop the nuclear reactor or start the nuclear reactor. Such a configuration where the movable fuel assemblies are arranged separated is particularly suitable for a large sized core.

The core in the present embodiment is configured so as to pull out the movable fuel assemblies toward the bottom side, but the invention is not limited to this. The movable fuel assemblies may also be formed so as to be pulled out toward the top side of the core.

Further, the fuel assemblies in the present  embodiment are formed to regular hexagonal prism shapes, but the invention is not limited to this. Any shapes of fuel assemblies may be employed. For example, to facilitate pullout and insertion of the fuel assemblies, the fuel assemblies may be tapered so as to gradually change in length along the longitudinal direction.

The auxiliary members in the present embodiment have structures similar to the fuel assemblies except for the substance which is arranged inside of the cladding materials, but the invention is not limited to this. As the auxiliary members, ones of any structures may be employed. The insides of the cladding materials may also be empty.

The fuel in the present embodiment was explained with reference to depleted uranium as the new fuel which was loaded into the core, but the invention is not limited to this. It is also possible to use at least one of natural uranium and depleted uranium to perform CANDLE burning. Further, the present invention can also be applied to any fast neutron reactor which enables CANDLE burning.

In the present embodiment, the burning part of the previous cycle was arranged at the top of the new fuel part at the beginning of the burning cycle, but the invention is not limited to this. The new fuel part can be arranged at either end of the burning part in the axial direction of the core. Furthermore, new fuel parts may be arranged at the two ends of the burning part.

Further, in the present embodiment, the part starting to burn at the beginning of a cycle uses the fuel which was arranged at the bottom of the core at the end of the cycle of the previous cycle, but the invention is not limited to this. The part starting to burn at the beginning of a cycle may also be formed so as to produce neutrons. For example, fuel containing a predetermined concentration of plutonium or enriched uranium etc. may also be arranged. Further, neutrons may be supplied from  the outside to cause burning to start.

Further, in the core in the present embodiment, the axial direction of the core is parallel with the vertical direction, but the invention is not limited to this. The axial direction of the core may also be parallel to the horizontal direction. That is, it is also possible to lay the core in the present embodiment sideways.

In the present embodiment, the explanation was given with reference to the example of a method of operation not controlling the reactivity of the core when the fuel is burning steadily, but the invention is not limited to this. It is also possible to control the reactivity.

In the present embodiment, the explanation was given with reference to the example of a core of a nuclear reactor used in a electric power generation facility, but the invention is not limited to this. It is possible to apply the present invention to a nuclear reactor in any facility. For example, it is possible to use the core of the nuclear reactor of the present invention as the power source for a ship etc.

In the above figures, the same or corresponding parts are assigned the same reference numerals. Note that, the above embodiments are illustrations and do not limit the invention. Further, in the embodiments, changes included in the claims are intended.

Reference Signs List

1    nuclear reactor

10         core

| 11 | new fuel part |
| 12 | burning part |
| 13 | burned up part |
| 21a | fuel assembly |
| 21b | fuel assembly |
| 22a | fuel rod |
| 23a | cladding material |
| 24aa, 24ab, 24ac | fuel pellet |
| 51 | auxiliary member |
| 52 | absorption rod |
| 71 | drive device |
| 72 | drive rod |

**Claims**

1. A nuclear reactor provided with a core which includes a new fuel part at which new fuel is loaded and a burning part which is arranged at one side of the new fuel part and which generates neutrons to enable fuel to burn, the new fuel including at least one type of uranium from among natural uranium and depleted uranium, the uranium absorbing neutrons to generate plutonium which fissions to generate output, and the burning part moving in a direction toward the new fuel part from the beginning to end of the burning cycle, wherein
during the period of power operation, a plurality of fuel assemblies are arranged at the core,
the plurality of fuel assemblies include fuel assemblies which are fastened to the core and fuel assemblies which can move in the axial direction of the core, and
the movable fuel assemblies are pulled out from the core so as to make the nuclear reactor stop and the movable fuel assemblies are inserted into the core from a pulled out state so as to start the nuclear reactor.

2. The nuclear reactor as set forth in claim 1, further provided with auxiliary members which include an absorption substance which absorbs neutrons, wherein
the auxiliary members are coupled with the movable fuel assemblies, and,
when stopping the nuclear reactor, the auxiliary members are inserted into the core along with the movable fuel assemblies being pulled out from the core.

3. The nuclear reactor as set forth in claim 1,
wherein the movable fuel assemblies are formed so that the fuel assemblies as a whole are pulled out from the core.

4. The nuclear reactor as set forth in claim 1,
wherein
the core is divided into a center region and a peripheral region,
the movable fuel assemblies are arranged in the center region, and
the fuel assemblies which are fastened to the core are arranged at the peripheral region.

5. The nuclear reactor as set forth in claim 1,
wherein the movable fuel assemblies are arranged at the core while separated at predetermined intervals.

# Fig.1

# Fig.2

: FIRST FUEL ASSEMBLY

: SECOND FUEL ASSEMBLY

# Fig.3

51

61

10

121

21b

21a

21a

PERIPHERAL
REGION

CENTER
REGION

PERIPHERAL
REGION

# Fig.4

# Fig.5

# Fig.6

# Fig.7

n-TH CYCLE BOC          n-TH CYCLE EOC

PART IN WHICH
FUEL IS TAKEN OUT

PART LOADED
WITH NEW FUEL

r=0          r=0

# Fig.8

MAXIMUM VALUE

Kinf

1.0

NEUTRON FLUENCE

## Fig.9

NEW FUEL PART | BURNING PART | BURNED UP PART

Kinf

1

101

CORE HEIGHT

## Fig.10

POWER DENSITY
NUMBER DENSITY OF URANIUM 238
NUMBER DENSITY OF FP

n-TH CYCLE BOC

n-TH CYCLE EOC

(n+1) CYCLE BOC

(n+1) CYCLE EOC

TOP END

101

BURNING PART

CORE HEIGHT

117

BOTTOM END

POWER DENSITY
NUMBER DENSITY OF
NUCLEAR SPECIES

# Fig.11

# Fig.12

# Fig.13

: FIRST FUEL ASSEMBLY

: SECOND FUEL ASSEMBLY

10

21b

21a

21b

21b

21b

| | INTERNATIONAL SEARCH REPORT | International application No. |
|---|---|---|
| | | PCT/JP2012/050112 |

A.  CLASSIFICATION OF SUBJECT MATTER
*G21C7/30*(2006.01)i

According to International Patent Classification (IPC) or to both national classification and IPC

B.  FIELDS SEARCHED

Minimum documentation searched (classification system followed by classification symbols)
G21C7/30

Documentation searched other than minimum documentation to the extent that such documents are included in the fields searched

| Jitsuyo Shinan Koho | 1922-1996 | Jitsuyo Shinan Toroku Koho | 1996-2012 |
|---|---|---|---|
| Kokai Jitsuyo Shinan Koho | 1971-2012 | Toroku Jitsuyo Shinan Koho | 1994-2012 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2002-71866 A  (President of Tokyo Institute of Technology),<br>12 March 2002 (12.03.2002),<br>entire text; all drawings<br>(Family: none) | 1-5 |
| Y | JP 41-3595 B1  (Hitachi, Ltd.),<br>02 March 1966 (02.03.1966),<br>entire text; all drawings<br>(Family: none) | 1-5 |
| A | JP 2007-232429 A  (Tokyo Institute of Technology),<br>13 September 2007 (13.09.2007),<br>entire text; all drawings<br>(Family: none) | 1-5 |

☐  Further documents are listed in the continuation of Box C.      ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 March, 2012 (07.03.12) | 19 March, 2012 (19.03.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

20

**EP 2 662 863 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3463100 B